# EUROPEAN PATENT SPECIFICATION

(11) **EP 2 327 841 B1**
(45) Date of publication and mention of the grant of the patent: **27.05.2015**
(21) Application number: 09425482.8
(22) Date of filing: 25.11.2009
(51) Int. Cl.: E03C 1/042, F16L 25/14, F16L 27/08

(54) **Assembly kit for a mixer tap, mixer tap and assembly method thereof**
Bausatz für eine Mischbatterie, Mischbatterie und Montageverfahren einer Mischbatterie
Kit d'assemblage pour mitigeur, mitigeur et procédé d'assemblage d'un mitigeur

(43) Date of publication of application: 01.06.2011
(73) Proprietor: CRS S.p.A., 20121 Milano (IT)
(72) Inventor: Luglio, Salvatore, 20121 Milano (IT)
(74) Representative: Chimini, Francesco

(56) References cited:
- EP-A1- 0 757 134
- DE-A1- 2 053 945
- DE-A1- 2 346 362
- GB-A- 460 604

## Description

The present invention relates to an assembly kit for a mixer tap, a mixer tap and assembly method thereof.

In particular, in the tap sector, it is known of to make mixer taps, for example wall-mounted, such as bath or shower mixers, comprising a body having two separate attachments for connection to relative separate water intakes, mounted on the wall or on a panel, respectively for the supply of hot water and cold water.

The body then performs mixing of the two flows and dispensing, for example, through a single tap spout.

The separate water intakes are essentially at a fixed space or distance and must be hydraulically connected to the attachments of the body.

The devices of the known art have numerous drawbacks.

In fact, not all mixer taps of the known art have the same centre distance between the attachments and between the water intakes.

There is in fact no international standard measure for such.

For this reason, it is known of in the art to make mixer groups having at least two different fixed centre distances so as to be adaptable to respective different sizes of water intakes.

This solution is expensive however because in practice it forces tap manufacturers to duplicate production of mixer taps, for example for baths and wall mounted showers.

It is also known of to use flexible connection hoses between the water intakes and the attachments of the shower mixers: the flexible hoses make it possible in fact to adapt the different sizes and dimensions and thus complete assembly of the mixer tap.

Such solution is expensive and inconvenient however in that it requires the use of cumbersome flexible hoses often to recuperate centre distances of the order of several millimetres. In addition, such solution may be aesthetically unappealing since, in assemblies not using cover panels for example, it would leave the hoses on view.

An assembly kit according to the preamble of claim 1 is disclosed in DE-A-2053945.

The purpose of the present invention is to overcome the drawbacks mentioned with reference to the known art.

Such drawbacks are resolved by an assembly kit for a mixer tap according to claim 1.

Other embodiments of the assembly kit according to the invention are described in the subsequent claims.

Further characteristics and advantages of the present invention will be more evident from the description given below by way of a preferred and non-limiting example, wherein:

Figure 1 shows a perspective view of a mixer tap fitted with a kit according to one embodiment of the present invention;

Figure 2 shows a perspective view of a component of the kit of the present invention;

Figure 3 shows a perspective view in separate parts of the component in figure 2;

Figure 4 shows a cross-section view of the component in figure 2, in one assembly configuration;

Figure 5 shows a perspective view of the part V in figure 3;

Figure 6 shows a plan view of the part in figure 5, from the side of the arrow VI in figure 5.

With reference to the aforesaid figures, reference numeral 4 globally denotes a mixer tap fitted with two separate water attachments 8,10 connectable to two respective water intakes 12,14.

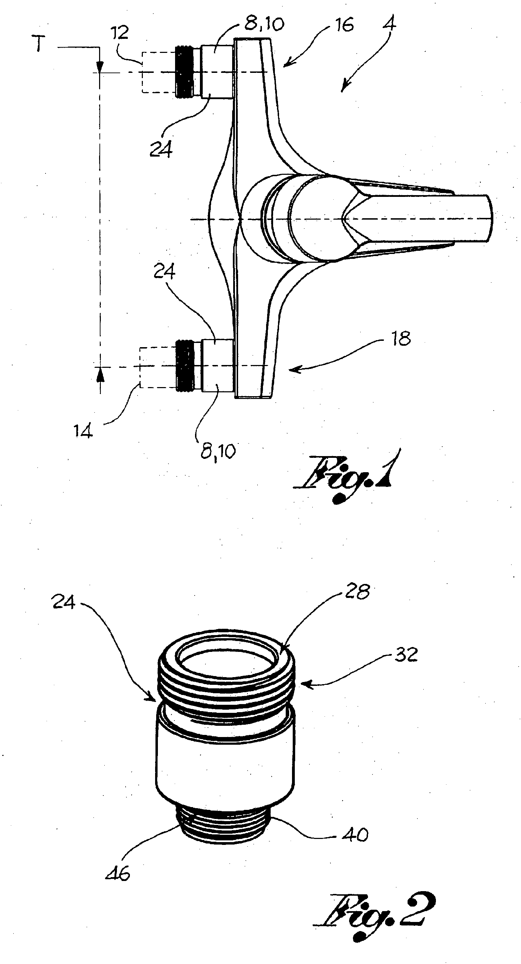

The water attachments 8, 10 are, for example situated opposite lateral extremities 16, 18 of the mixer tap 4 and are shaped, for example, as cylindrical holes. The water intakes 12, 14, shown by dotted lines in figure 1, are usually tubular stumps coming out of a wall for attachment of the mixer tap 4 and are fluidically connected to the plumbing system which supplies the mixer tap 4.

The present invention relates to an assembly kit for the mixer tap 4 comprising a number of components, described in more detail below, suitable to be installed between the water attachments 8,10 and the water intakes 12,14 so as to enable the mechanical and hydraulic connection of the mixer tap 4 and the water intakes 12,14.

According to one embodiment, the kit comprises a first connection bush 24 suitable to be fluidically connected to a water intake12, 14 by means of a shaped coupling.

The first connection bush 24 is, for example, generally cylindrical and hollow so as to allow the passage of water through it.

The first connection bush 24 comprises a first coupling portion 28 suitable to mechanically and fluidically connect it to said water intake 12, 14. For example the coupling portion 28 is a cylindrical or conic portion fitted with a first outer threading 32 to permit screwing onto a water intake 12, 14.

The first bush 24 has a first assembly axis X-X which defines a centering position of the first bush 24 in relation to the associable water intake 12, 14.

Preferably, the first coupling portion 28 is axial symmetric to said first assembly axis X-X.

The first connection bush 24 comprises a housing seat 36 opposite the coupling portion 28 and the associable water intake 12, 14.

The assembly kit comprises, in addition, a second connection bush 40 suitable to be mechanically and fluidically connected to an attachment 8, 10 of the mixer tap 4.

For example, the second connection bush 40 comprises a second coupling portion 44, for example provided with a second outer threading 46, to allow screwing onto a water intake 12, 14.

The second connection bush 40 has a second assembly axis Y-Y which defines a centering position of the second bush 40 in relation to the associable water attachment 8, 10 of the mixer tap 4.

Preferably, the second coupling portion 44 is axial symmetric to said second assembly axis X-X.

The second bush 40 has a connection extremity 48 suitable to engage in the housing seat 36 of the first bush 24 forming a shaped coupling with it; in other words the connection extremity 48 is counter-shaped to the housing seat 36 so as to form a shaped coupling with the latter.

Advantageously, at least one out of the connection extremity 48 and the housing seat 36, has a misalignment W in relation to the assembly axis X-X, Y-Y of the respective bush 24,40, so that by varying the relative angular position of the first and second bush 24,40, it is possible to misalign the bushes 24,40 with each other, to adapt the position of the respective assembly axes X-X, Y-Y to the respective water intakes 12,14 and attachments 8,10 of the mixer tap 4.

In other words, by rotating the first and the second bush 24, 40 to each other around the respective assembly axes X-X and Y-Y, it is possible to vary the distance between said axes X-X and Y-Y, keeping them parallel to each other, up to a maximum value of misalignment W. If necessary, both the connection extremity 48 and the housing seat 36 may have a misalignment W in relation to their assembly axes X-X, Y-Y: in such case it will be possible to vary the distance between said axes X-X and Y-Y, keeping them parallel to each other, up to a maximum value equal to the sum of the misalignments W of the individual bushes 24, 40.

Thanks to such variations of the distance between the assembly axes X-X and Y-Y, it is possible to adapt the centre distance T between the attachments 8, 10 of the mixer tap 4 to the centre distance between the water intakes 12, 14 on the wall or panel.

As mentioned, according to one possible embodiment, the housing seat 36 is misaligned in relation to the first assembly axis X-X. In other words, the housing seat 36 is not centred or axial symmetric in relation to the first assembly axis X-X.

According to a further possible embodiment, the connection extremity 48 of the second bush 40 is misaligned in relation to the second assembly axis Y-Y.

According to one embodiment, the shaped coupling between the connection extremity 48 and the housing seat 36 is a rotary type coupling, so as to allow a relative rotation between said bushes 24, 40 following reciprocal engagement. This way continuous adjustment of the misalignment between the axes of the bushes 24, 40 may be performed. A rotary type coupling is taken to mean a coupling able to guarantee reciprocal rotation while maintaining the connection or engagement between the two connected elements.

According to a further embodiment, the shaped coupling between the connection extremity 48 and the housing seat 36 is a prismatic type coupling, so as not to allow a relative rotation between said bushes 24, 40 following reciprocal engagement. A prismatic coupling is taken to be a coupling able to guarantee a reciprocal axial engagement of the bushes 24, 40, preventing reciprocal rotation between them as long as they are axially engaged to each other. This way the adjustment of the relative angular position of the bushes 24, 40, and thus of the misalignment W between the axes of the bushes 24, 40 must be performed before coupling them.

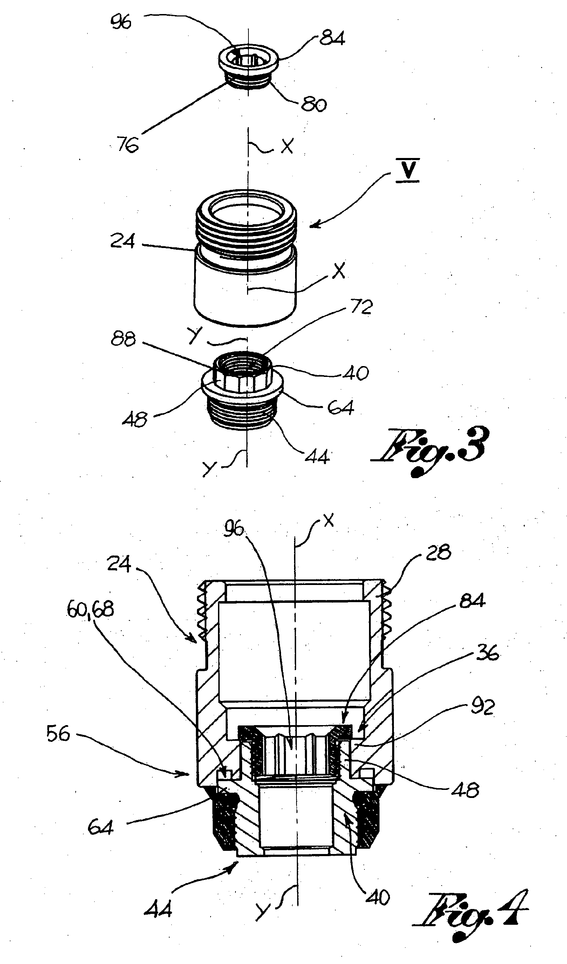

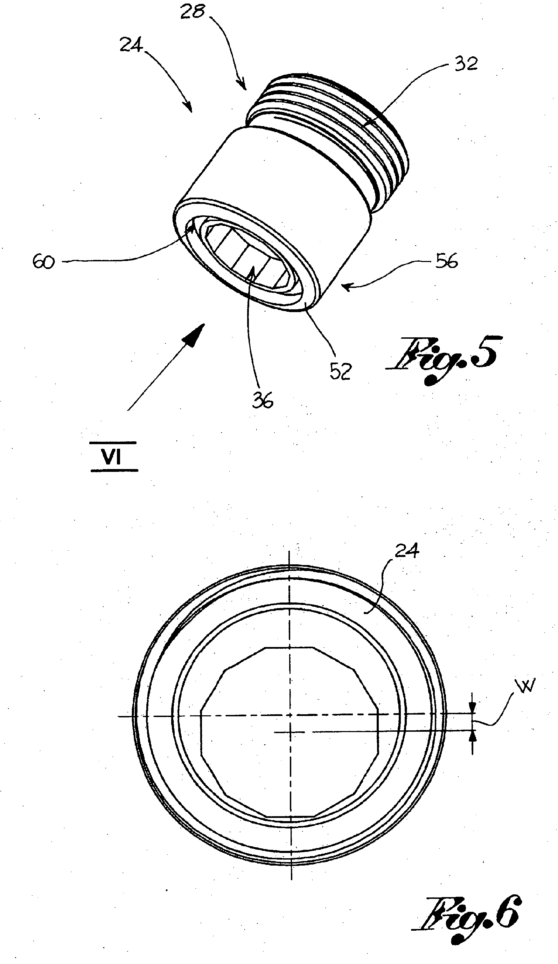

For example, the housing seat 36, is a polygonal shape (figures 3, 5-6) in relation to a section perpendicular to a said first assembly axis X-X.

For example, said polygonal shape may comprise a regular polygon: this way the adjustment of the relative angular position between the bushes 24, 40 will be of the discrete type and specifically will be equal to a fraction 1/n of a round angle of 360 degrees, in which n is the number of sides of the said polygon.

Obviously, it is possible to use seats, and respective connection extremities 48 counter-shaped to them, in the shape of polygons of any type, regular or not.

The first bush 24 comprises a shoulder 52, preferably having a circular crown arrangement, positioned at an axial extremity 56 of the housing seat 36 which looks onto the associable connection extremities 48 of the second bush 40. Said shoulder 52 may comprises a groove 60, preferably circular, in which a gasket 68, for example of the 'O-ring' type, is inserted so as to ensure a hermetic seal between the two bushes 24, 40.

According to one embodiment, the second connection bush 40 comprises a stop collar 64 able to form a stop to the insertion of the connection extremity 48 in the housing seat 36, said stop collar 64 abutting against the shoulder 52 of the first bush 24 positioned perimetrally to the housing seat 36.

Preferably, the shoulder 52 abuts against the gasket 68 so as to axially compress it against the groove 60.

The connection extremity 48 comprises an attachment hole 72 housing a fastening element 76 which axially blocks the two bushes 24, 40, to each other, the fastening element 76 being inserted inside the housing seat 36 and blocking itself mechanically over said attachment hole 72.

The fastening element 76 comprises a spigot portion 80 which engages in the attachment hole 72 and a collar 84 of a larger diameter than the spigot portion 80. Preferably the spigot portion 80 is threaded externally so as to be able to engage in a corresponding female screw 88 made inside the attachment hole 72 of the connection extremity 48.

The collar 84 extends so as to abut against an annular bracket 92 which delimits the housing seat 36. This way, once the fastening element has engaged, a bilateral axial restraint is created between the two bushes 24, 40. In fact, the extraction of the second bush 40 from the first bush 24 is prevented by the restraint formed by the collar 84 which creates an undercut in relation to the annular bracket 92, while the further insertion of the second bush 40 inside the first bush 24 is prevented by the contact between the stop collar 64 and the shoulder 52.

The fastening element 76 is perforated, that is has a through hole 96, to allow the passage of water through the bushes 24, 40.

According to one embodiment, said through hole 96 of the fastening element 76 is shaped so as to allow the insertion of a wrench to tighten the fastening element 76 to the relative attachment hole 72 of the connection extremity 48.

As mentioned, the mixer tap 4 according to the present invention comprises in conjunction with at least one of the water attachment 8, 10, a first and a second connection bush 24, 40 engaged to each other, wherein the second bush 40 is mechanically and fluidically connected to said at least one water attachment 8, 10 and the first bush 24 is mechanically and fluidically connected to the water intake 12, 14.

According to a further embodiment, the mixer tap 4, at both water attachments 8, 10, comprises pairs of connection bushes 24, 40 engaged to each other so as to allow a mechanical and hydraulic connection between the water intakes 12, 14 and the water attachments 8, 10.

The assembly method of a kit for a mixer tap according to the present invention will now be described.

In particular, the method comprises the phases of predisposing a mixer tap 4 fitted with two separate attachments 8,10 for respective water intakes 12,14 positioned for example on the wall or on a panel.

On at least one of said water intakes an assembly kit as described is installed and in particular a second bush 40 is mechanically and fluidically connected to a water attachment 8,10; in addition a first bush 24 is mechanically and fluidically connected to a water intake 12,14 and the said bushes 24,40 are engaged so as to form a shaped coupling between the connection extremity 48 of the second bush 40 and the housing seat 36 of the first bush 24.

Before tightening the various connections the relative angular position between said bushes 24,40 needs to be adjusted so as to centre the assembly axes X-X and Y-Y with the water intakes 12,14 and the water attachments 8,10 respectively.

If the coupling between the connection extremity 48 and the housing seat 36 is of the rotary type, it is possible to pre-assemble the two bushes 24, 40 to each other and then adjust the relative angular position during the phase of connection to the water attachments 8, 10 and to the water intakes 12, 14. In the case in which the coupling between the connection extremity 48 and the housing seat 36 is of the prismatic type, the relative angular position between the bushes 24, 40 must be set before engaging the two bushes 24, 40 to each other.

As may be seen from the description, the assembly kit according to the present invention makes it possible to overcome the drawbacks of the known art.

In fact, thanks to the kit which the present invention relates to, it is possible to adapt the centre distance between the attachments of a mixer tap to the distance between the walls or panel-mounted water intakes, rapidly and cheaply without having to make a new mixer tap with a modified centre distance.

The assembly of the kit therefore permits a considerable saving in terms of production costs in that it makes it possible to produce mixer taps with a single centre distance between the attachments, to then modify the same as needed by simply placing the kit which the present invention relates to between the attachments and the water intakes.

Advantageously, the kit which the present invention relates to, permits precise adjustment of the centre distance so as to adapt it to any kind of installation of wall or panel-mounted water intakes.

Assembly and adjustment are fast and simple to perform and do not require the use of specialised tools.

The kit can also be used on one attachment only: in other words, if the difference in centre distance is limited, for example, the bushes can be fitted between a single water attachment and the corresponding water intake.

A person skilled in the art may make numerous modifications and variations to the kit described above so as to satisfy contingent and specific requirements while remaining within the sphere of protection of the invention as defined by the following claims.

## Claims

1. Assembly kit for a mixer tap (4) fitted with two separate water attachments (8, 10) connectable to two respective separate water intakes (12, 14),
- the kit comprising a first connection bush (24) suitable to be fluidically connected to a water intake (12,14) by means of a shaped coupling, the first connection bush (24) having a housing seat (36) on the side opposite the associable water intake (12,14), the first bush (24) having a first assembly axis (X-X) which defines a centering position of the first bush (24) in relation to the associable water intake (12, 24),
- a second connection bush (40) suitable to be fluidically connected to a water attachment (8, 10) of the mixer tap (4) by means of a shaped coupling,
- the second connection bush (40) having a connection extremity (48) suitable to engage in the housing seat (36) of the first bush (24),
- the second bush (40) having a second assembly axis (Y-Y) which defines a centering position of the second bush (40) in relation to the associable water attachment (8,10) of the mixer tap (4),
- wherein the connection extremity (48) of the second bush (40) engages in the housing seat (36) of the first bush (24) forming a shaped coupling,
- and wherein at least one between the connection extremity (48) and the housing seat (36) has a misalignment (W) in relation to the assembly axis (X-X, Y-Y) of the respective bush (24,40), so that by varying the relative angular position of the first and second bush (24,40), it is possible to misalign the bushes (24,40) with each other, to adapt the position of the respective assembly axes (X-X, Y-Y) to the respective water intakes (12,14) and attachments (8,10) of the mixer tap (4),
**characterised in that**
the connection extremity (48) comprises an attachment hole (72) housing a fastening element (76) which axially blocks the two bushes (24, 40), to each other, wherein during assembly of the kit the fastening element (76) is inserted inside the housing seat (36) and blocks itself mechanically over said attachment hole (72),
wherein said fastening element (76) comprises a through hole (96) to allow the passage of water through the bushes (24, 40).

2. Assembly kit according to claim 1, wherein the shaped coupling between the connection extremity (48) and the housing seat (36) is a rotary type coupling, so as to allow a relative rotation between said bushes (24,40) following reciprocal engagement.

3. Assembly kit according to claim 1, wherein the shaped coupling between the connection extremity (48) and the housing seat (36) is a prismatic type coupling, so as not to allow a relative rotation between said bushes (24,40) following reciprocal engagement.

4. Assembly kit according to any of the previous claim, wherein the housing seat (36) is misaligned in relation to the first assembly axis (X-X).

5. Assembly kit according to any of the previous claims, wherein the connection extremity (48) of the second bush (40) is misaligned in relation to the second assembly axis (Y-Y).

6. Assembly kit according to any of the previous claims, wherein said housing seat (36), is a polygonal shape in relation to a section perpendicular to a said first assembly axis X-X.

7. Assembly kit according to any of the previous claims, wherein the second bush (40) comprises a stop collar (64) suitable to form a stop to the insertion of the connection extremity (48) in the housing seat (36), said stop collar (64) abutting against a relative shoulder (52) of the first bush (24) positioned perimetrally to the housing seat (36).

8. Assembly kit according to claim 1, wherein said through hole (96) of the fastening element (76) is shaped so as to allow the insertion of a wrench to tighten the fastening element (76) to the relative attachment hole (72) of the connection extremity (48).

9. Assembly kit according to any of the previous claims, wherein said first bush (24) comprises a first outer threading (32) for the mechanical connection to said water intake (12, 14).

10. Assembly kit according to any of the previous claims, wherein said second bush (40) comprises a second outer threading (46) for the mechanical connection to an attachment (8, 10) of the associable mixer tap (4).

11. Mixer tap (4) comprising at least one assembly kit according to any of the claims from 1 to 10.

12. Mixer tap (4) according to claim 11, comprising at the point of at least one water attachment (8, 10), a first and a second connection bush (24, 40) mechanically and fluidically connected to each other, wherein the second bush (40) is mechanically and fluidically connected to said at least one water attachment (8, 10) and the first bush (24) is mechanically and fluidically connected to the water intake (12, 14).

13. Assembly method of a mixer tap comprising the phases of:
- predisposing a mixer tap (4) fitted with two separate attachments (8, 10) for respective water intakes (12, 14)_{.}
- installing on one of said water intakes (12, 14) an assembly kit according to any of the claims from 1 to 10,
- adjusting the relative angular position between said bushes (24,40) so as to centre the first assembly axis(X-X) of the first bush (24) with the relative water intake (12,14) and the second assembly axis (Y-Y) of the second bush (40) with the water attachment (8, 10),
- tightening the connections.

## Patentansprüche

1. Bausatz für eine Mischbatterie (4), die mit zwei separaten Wasseranschlüssen (8, 10) ausgestattet ist, die an zwei entsprechende separate Wasserzuläufe (12, 14) anschließbar sind,
- wobei der Satz eine erste Verbindungsbuchse (24) umfasst, die dazu geeignet ist, strömungstechnisch an einen Wasserzulauf (12, 14) mittels einer geformten Kopplung verbunden zu werden, wobei die erste Verbindungsbuchse (24) einen Gehäusesitz (36) auf der Seite gegenüber dem anschließbaren Wasserzulauf (12,14) aufweist, wobei die erste Buchse (24) eine erste Bauachse (X-X) aufweist, die eine Zentrierposition der ersten Buchse (24) in Bezug auf den anschließbaren Wasserzulauf (12, 14) definiert,
- eine zweite Verbindungsbuchse (40) die dazu geeignet ist, strömungstechnisch an einen Wasseranschluß (8, 10) der Mischbatterie (4) mittels einer geformten Kopplung verbunden zu werden,
- wobei die zweite Verbindungsbuchse (40) ein Verbindungsende (48) aufweist, das dazu geeignet ist, in den Gehäusesitz (36) der ersten Buchse (24) einzugreifen,
- wobei die zweite Buchse (40) eine zweite Bauachse (Y-Y) aufweist, die eine Zentrierposition der zweiten Buchse (40) in Bezug auf den anschließbaren Wasseranschluß (8, 10) der Mischbatterie (4) definiert,
- wobei das Verbindungsende (48) der zweiten Buchse (40) in den Gehäusesitz (36) der ersten Buchse (24) eingreift, um eine geformte Kopplung zu bilden,
- und wobei mindestens einer aus dem Verbindungsende (48) und dem Gehäusesitz (36) eine Verstellung (W) in Bezug auf die Bauachse (X-X, Y-Y) der jeweiligen Buchse (24, 40) aufweist, so dass durch variieren der relativen Winkellage der ersten und zweiten Buchse (24, 40) es möglich ist, die Buchsen (24, 40) zueinander zu verstellen, um die Position der jeweiligen Bauachsen (X-X, Y-Y) an die jeweiligen Wasserzuläufe (12, 14) und Anschlüsse (8, 10) der Mischbatterie (4) anzupassen,
**dadurch gekennzeichnet, dass** das Verbindungsende (48) ein Befestigungsloch (72) umfasst, das ein Verbindungselement (76) aufnimmt, das axial die zwei Buchsen (24, 40) zueinander versperrt, wobei während des Aufbaus des Satzes das Verbindungselement (76) in den Gehäusesitz (36) eingesetzt wird und sich selbst mechanisch über das Befestigungsloch (72) versperrt,
wobei das Verbindungselement (76) eine Durchgangsbohrung (96) umfasst, um den Durchfluss von Wasser durch die Buchsen (24, 40) zu ermöglichen.

2. Bausatz nach Anspruch 1, wobei die geformte Kopplung zwischen dem Verbindungsende (48) und dem Gehäusesitz (36) eine rotationsartige Kopplung ist, so dass eine relative Rotation zwischen den Buchsen (24, 40) einem gegenseitigen Eingreifen folgend ermöglicht wird.

3. Bausatz nach Anspruch 1, wobei die geformte Kopplung zwischen dem Verbindungsende (48) und dem Gehäusesitz (36) eine Kopplung vom prismatischen Typ ist, so dass eine relative Rotation zwischen den Buchsen (24, 40) einem gegenseitigen Eingreifen folgend nicht ermöglicht wird.

4. Bausatz nach irgendeinem der vorangegangenen Ansprüche, wobei der Gehäusesitz (36) in Bezug zu der ersten Bauachse (X-X) verstellt ist.

5. Bausatz nach irgendeinem der vorangegangenen Ansprüche, wobei das Verbindungsende (48) der zweiten Buchse (40) in Bezug zu der zweiten Bauachse (Y-Y) verstellt ist.

6. Bausatz nach irgendeinem der vorangegangenen Ansprüche, wobei der Gehäusesitz (36) eine polygonale Form, in Bezug auf einen Schnitt senkrecht zu der ersten Bauachse (X-X), ist.

7. Bausatz nach irgendeinem der vorangegangenen Ansprüche, wobei die zweite Buchse (40) einen Anschlagbund (64) umfasst, der dafür geeignet ist, einen Anschlag für das Einführen des Verbindungsendes (48) in den Gehäusesitz (36) zu bilden, wobei der Anschlagbund (64) gegen einen relativen Ansatz (52) der ersten Buchse (24) anliegt, der umlaufend auf dem Gehäusesitz (36) angeordnet ist.

8. Bausatz nach Anspruch 1, wobei das Durchgangsloch (96) des Verbindungselements (76) so geformt ist, dass das Einführen eines Schlüssels, um das Verbindungselement (76) an das relative Befestigungsloch (72) des Verbindungsendes (48) festzuziehen, ermöglicht wird.

9. Bausatz nach irgendeinem der vorangegangenen Ansprüche, wobei die erste Buchse (24) ein erstes äußeres Gewinde (32) für die mechanische Verbindung an den Wasserzulauf (12, 14) umfasst.

10. Bausatz nach irgendeinem der vorangegangenen Ansprüche, wobei die zweite Buchse (40) ein zweites äußeres Gewinde (46) für die mechanische Verbindung an einen Anschluß (8, 10) der anschließbaren Mischbatterie (4) umfasst.

11. Mischbatterie (4) umfassend mindestens einen Bausatz gemäß irgendeinem der Ansprüche von 1 bis 10.

12. Mischbatterie (4) gemäß Anspruch 11, umfassend an dem Punkt von mindestens einem Wasseranschluss (8, 10) eine erste und eine zweite Verbindungsbuchse (24, 40), die mechanisch und strömungstechnisch miteinander verbunden sind, wobei die zweite Buchse (40) mechanisch und strömungstechnisch mit dem mindestens einen Wasseranschluss (8, 10) verbunden ist und die erste Buchse (24) mechanisch und strömungstechnisch mit dem Wasserzulauf (12, 14) verbunden ist.

13. Montageverfahren einer Mischbatterie umfassend die Phasen von:
- Prädisponieren einer Mischbatterie (4), die mit zwei separaten Anschlüssen (8, 10) für jeweilige Wasserzuläufe (12, 14) ausgestattet ist,
- Installieren eines Bausatzes gemäß irgendeinem der Ansprüche von 1 bis 10 an einem der Wasserzuläufe (12, 14),
- Einstellen der relativen Winkellage zwischen den Buchsen (24, 40) um die erste Bauachse (X-X) der ersten Buchse (24) mit dem jeweiligen Wasserzulauf (12, 14) und um die zweite Bauachse (Y-Y) der zweiten Buchse (40) mit dem Wasseranschluss (8, 10) zu zentrieren,
- Anziehen der Verbindungen.

## Revendications

1. Kit de montage pour un robinet mélangeur (4) équipé de deux prises d'eau séparées (8, 10) raccordables à deux arrivées d'eau séparées (12, 14),
- ce kit comprenant un premier manchon de raccordement (24) pouvant être relié, sur le plan fluidique, à une arrivée d'eau (12,14) à l'aide d'un raccord façonné, le premier manchon de raccordement (24) ayant une surface d'appui (36) sur le côté opposé à l'arrivée d'eau (12,14) associable, le premier manchon (24) possédant un premier axe de montage (X-X) qui définit une position de centrage du premier manchon (24) par rapport à l'arrivée d'eau (12,14) associable,
- un deuxième manchon de raccordement (40) pouvant être relié, sur le plan fluidique, à une prise d'eau (8, 10) du robinet mélangeur (4) à l'aide d'un raccord façonné,
- le deuxième manchon de raccordement (40) possédant une extrémité de raccordement (48) pouvant s'insérer dans la surface d'appui (36) du premier manchon (24),
- le deuxième manchon (40) possédant un deuxième axe de montage (Y-Y) qui définit une position de centrage du deuxième manchon (40) par rapport à la prise d'eau (8,10) associable du robinet mélangeur (4),
- dans lequel l'extrémité de raccordement (48) du deuxième manchon (40) s'insère dans la surface d'appui (36) du premier manchon (24) formant un raccord façonné,
- et dans lequel l'un au moins de l'extrémité de raccordement (48) et de la surface d'appui (36) possède un décentrage (W) par rapport à l'axe de montage (X-X, Y-Y) du manchon correspondant (24,40), de telle sorte que, en faisant varier la position angulaire relative des premier et deuxième manchons (24,40), il est possible de décentrer les manchons (24,40) l'un par rapport à l'autre afin d'adapter la position des axes de montage (X-X, Y-Y) aux arrivées d'eau (12,14) et aux prises (8,10) du robinet mélangeur (4),
**caractérisé par le fait que**
l'extrémité de raccordement (48) comprend un trou de fixation (72) contenant un élément de fixation (76) qui bloque axialement les deux manchons (24, 40) l'un par rapport à l'autre, dans lequel, pendant le montage du kit, l'élément de fixation (76) est inséré à l'intérieur de la surface d'appui (36) et se bloque mécaniquement sur ledit trou de fixation (72),
dans lequel ledit élément de fixation (76) comprend un trou traversant (96) permettant le passage de l'eau à travers les manchons (24, 40).

2. Kit de montage selon la revendication 1, dans lequel le raccord façonné entre l'extrémité de raccordement (48) et la surface d'appui (36) est un raccord de type rotatif de manière à permettre une rotation relative entre lesdits manchons (24,40) après un enclenchement réciproque.

3. Kit de montage selon la revendication 1, dans lequel le raccord façonné entre l'extrémité de raccordement (48) et la surface d'appui (36) est un raccord de type prismatique de manière à empêcher une rotation relative entre lesdits manchons (24,40) après un enclenchement réciproque.

4. Kit de montage selon une des revendications précédentes, dans lequel la surface d'appui (36) est décentrée par rapport au premier axe de montage (X-X).

5. Kit de montage selon une des revendications précédentes, dans lequel l'extrémité de raccordement (48) du deuxième manchon (40) est décentrée par rapport au deuxième axe de montage (Y-Y).

6. Kit de montage selon une des revendications précédentes, dans lequel ladite surface d'appui (36) a une forme polygonale par rapport à une section perpendiculaire à un dit premier axe de montage X-X.

7. Kit de montage selon une des revendications précédentes, dans lequel le deuxième manchon (40) comprend un collier de butée (64) pouvant former un arrêt de l'insertion de l'extrémité de raccordement (48) dans la surface d'appui (36), ledit collier de butée (64) appuyant contre un épaulement associé (52) du premier manchon (24) positionné en périphérie de la surface d'appui (36).

8. Kit de montage selon la revendication 1, dans lequel ledit trou traversant (96) de l'élément de fixation (76) est façonné de manière à permettre l'insertion d'une clé servant au serrage de l'élément de fixation (76) sur le trou de fixation associé (72) de l'extrémité de raccordement (48).

9. Kit de montage selon une des revendications précédentes, dans lequel ledit premier manchon (24) comprend un premier filetage extérieur (32) pour le raccordement mécanique à ladite arrivée d'eau (12, 14).

10. Kit de montage selon une des revendications précédentes, dans lequel ledit deuxième manchon (40) comprend un deuxième filetage extérieur (46) pour le raccordement mécanique à une fixation (8, 10) du robinet mélangeur associable (4).

11. Robinet mélangeur (4) comprenant au moins un kit de montage selon une des revendications 1 à 10.

12. Robinet mélangeur (4) selon la revendication 11, comprenant, à l'endroit d'au moins une prise d'eau (8, 10), un premier et un deuxième manchon de raccordement (24, 40) solidaires sur les plans mécanique et fluidique, dans lequel le deuxième manchon (40) est relié mécaniquement et fluidiquement à ladite au moins une prise d'eau (8, 10) et le premier manchon (24) est relié mécaniquement et fluidiquement à l'arrivée d'eau (12, 14).

13. Méthode de montage d'un robinet mélangeur comprenant les phases:
- de préparation d'un robinet mélangeur (4) équipé de deux fixations séparées (8, 10) pour les arrivées d'eau correspondantes (12, 14),
- d'installation, sur une desdites arrivées d'eau (12, 14), d'un kit de montage selon une des revendications 1 à 10,
- d'ajustement de la position angulaire relative entre lesdits manchons (24,40) de manière à centrer le premier axe de montage (X-X) du premier manchon (24) avec l'arrivée d'eau (12,14) associée et le deuxième axe de montage (Y-Y) du deuxième manchon (40) avec la prise d'eau (8,10),
- de serrage des branchements.
